# DEMANDE DE BREVET EUROPEEN

(11) **EP 1 324 046 A1**
(43) Date de publication de la demande: **02.07.2003**
(21) Numéro de dépôt: 02293056.4
(22) Date de dépôt: 10.12.2002
(51) Int. Cl.: G01P 3/44, G08C 17/00, H04B 10/22

(54) **Roulement comprenant un ensemble de transmissions d'information sans fil**

(30) Priorité: 19.12.2001 FR 0116486
(71) Demandeur: SNR ROULEMENTS, F-74010 Annecy (FR)
(72) Inventeur: Bochet, Alain, 74600 Seynod (FR)
(74) Mandataire: Derambure, Christian

(57) **Abrégé**

L'invention concerne un roulement ou palier du type comprenant, monté entre une bague fixe (2) et une bague tournante (3), un ensemble (4) comprenant :
- une armature porte-codeur (6, 8) ;
- un dispositif de mesure (7) des impulsions issues du codeur (5) ;
- une armature porte-capteur (8, 6) ; et
- un émetteur radio électrique (14) qui est intégré au dispositif de mesure (7) dans un circuit intégré personnalisé type ASIC (16), l'antenne (20) de l'émetteur radio électrique (14) étant formée d'une piste circulaire réalisée dans le circuit (16).

## Description

L'invention concerne un roulement ou un palier qui est destiné à être monté entre un support fixe et un support tournant, ainsi qu'un procédé de montage d'un tel roulement.

Elle vise plus particulièrement la mesure du sens de rotation et/ou de la vitesse de rotation et/ou de la position du support tournant par rapport au support fixe. En outre, elle peut permettre la réalisation de l'étanchéité du roulement ou du palier vis à vis de son environnement.

L'invention s'applique notamment dans le domaine des roulements de roue de véhicule, lesdits roulements comprenant une bague tournante et une bague fixe entre lesquelles est disposé un ensemble à codeur magnétique multipolaire incorporé, ledit ensemble pouvant être préassemblé.

On connaît déjà des ensembles formant joint d'étanchéité à codeur magnétique multipolaire incorporé qui comprennent :
- une armature porte-codeur à laquelle est associé le codeur ;
- un dispositif de mesure des impulsions issues du codeur qui est apte à délivrer des signaux numériques en fonction du champ magnétique mesuré ; et
- une armature porte-capteur à laquelle est associé, à distance d'entrefer du codeur, le dispositif de mesure.

Dans les ensembles de l'art antérieur, le dispositif de mesure est relié, par l'intermédiaire de conducteurs électriques, à un calculateur apte à déterminer et à délivrer les informations souhaitées, par exemple à un système anti-blocage ou anti-patinage des roues du véhicule.

Les conducteurs électriques ont pour fonction d'une part de permettre l'alimentation en énergie du dispositif de mesure et d'autre part de transmettre les signaux de mesure du dispositif de mesure vers le calculateur.

Ce type de technologie présente un certain nombre d'inconvénients.

En effet, dans ce type d'ensemble, le positionnement du dispositif de mesure par rapport au codeur doit être réalisé de façon très précise pour respecter la distance d'entrefer de sorte que, lors du montage, la présence des conducteurs électriques est une gêne très importante.

En outre, les conducteurs électriques doivent résister aux environnements très sévères du roulement, en particulier sur les applications dans les roues de véhicule.

Par ailleurs, les ensembles de l'art antérieur ont des conceptions différentes selon la mise en rotation de la bague intérieure ou de la bague extérieure du roulement car la présence des conducteurs électriques interdit une mise en rotation aisée du dispositif de mesure.

Pour pallier ces inconvénients, le document US-5 898 388 décrit un ensemble comprenant un dispositif inductif pour le transport d'une part de l'énergie et d'autre part du signal de mesure entre une première unité télémétrique disposée dans l'ensemble et une deuxième unité télémétrique placée à distance de l'ensemble.

Cet ensemble présente notamment l'inconvénient de devoir disposer la seconde unité télémétrique dans l'environnement immédiat de la première car la transmission des informations se fait par l'intermédiaire d'un champ magnétique dont l'intensité décroît de façon exponentielle en fonction de la distance.

Un tel ensemble est donc difficile à monter en ce que la deuxième unité télémétrique doit être disposée précisément et à distance d'entrefer de la première, c'est-à-dire à une distance de quelques millimètres avec une tolérance admissible de l'ordre de 10%.

L'invention vise donc à remédier à l'ensemble de ces inconvénients en proposant notamment un roulement pourvu d'un ensemble à codeur multipolaire incorporé qui peut être préassemblé et former joint d'étanchéité, dans lequel d'une part le dispositif de mesure est intégré de fabrication, et d'autre part la transmission des signaux de mesure entre le dispositif de mesure et le calculateur est réalisée par un système émetteur/récepteur d'onde radio électrique dont l'émetteur est associé à l'ensemble et le récepteur est externe à lui.

Par conséquent, le dispositif de mesure étant dépourvu de conducteurs électriques, il peut facilement être mis en rotation. Ainsi, pour une même conception de l'ensemble, le dispositif de mesure peut être associé soit à la bague tournante soit à la bague fixe de sorte que la conception de l'ensemble est indépendante du choix de la pièce tournante du roulement.

En outre, l'utilisation de l'ensemble permet de s'affranchir des contraintes de positionnement du récepteur par rapport à l'émetteur.

En effet, l'intensité d'une onde radio électrique, dont la composante champ magnétique est couplée à la composante champ électrique, diminue en 1/X, X étant la distance de transmission entre l'émetteur et le récepteur. Ainsi, le récepteur peut être disposé dans un endroit quelconque du véhicule et à une distance de l'émetteur pouvant atteindre quelques mètres.

De plus, lors du montage du roulement, la contrainte de positionnement du dispositif de mesure par rapport au codeur peut, dans le cas où l'ensemble est préassemblé, être évitée.

A cet effet, et selon un premier aspect, l'invention propose un roulement ou palier du type comprenant au moins une bague fixe destinée à être associée à une structure fixe, au moins une bague tournante destinée à être associée à une structure tournante, des corps roulants disposés entre lesdites bagues, et, monté entre une bague fixe et une bague tournante, un ensemble comprenant :
- une armature porte-codeur à laquelle est associé le codeur ;
- un dispositif de mesure des impulsions issues du codeur qui est apte à délivrer des signaux numériques en fonction du champ magnétique mesuré ;
- une armature porte-capteur à laquelle est associé, à distance d'entrefer du codeur, le dispositif de mesure ; et
- un émetteur radio électrique qui est intégré au dispositif de mesure dans un circuit intégré personalisé type ASIC de sorte à transmettre une onde radio électrique représentative des signaux issus dudit dispositif vers un récepteur externe destiné à être situé à distance de l'ensemble, ledit récepteur étant apte, à partir de ces ondes, à adresser à un calculateur les signaux nécessaires pour calculer le sens de rotation et/ou la vitesse de rotation et/ou la position du codeur par rapport au dispositif de mesure, dans lequel l'antenne de l'émetteur radio électrique est formée d'une piste circulaire réalisée dans le circuit.

Selon un deuxième aspect, l'invention propose un procédé de montage d'un tel roulement qui comprend les étapes prévoyant de :
- préassembler l'ensemble ;
- monter l'ensemble préassemblé entre une bague fixe et une bague tournante du roulement préalablement monté.

D'autres objets et avantages de l'invention apparaîtront au cours de la description qui suit, faite en référence aux dessins annexés, dans lesquels :
- la figure 1 est une vue partielle et en coupe radiale d'un roulement pourvu d'un ensemble formant joint d'étanchéité à codeur multipolaire incorporé, suivant un premier mode de réalisation de l'invention ;
- la figure 2 est une vue partielle et en coupe radiale d'un roulement pourvu d'un ensemble formant joint d'étanchéité à codeur multipolaire incorporé, suivant un deuxième mode de réalisation de l'invention ;
- la figure 3 est un schéma électronique simplifié du dispositif de mesure et du système émetteur/récepteur d'onde radio électrique de l'ensemble représenté sur les figures 1 et 2 ;

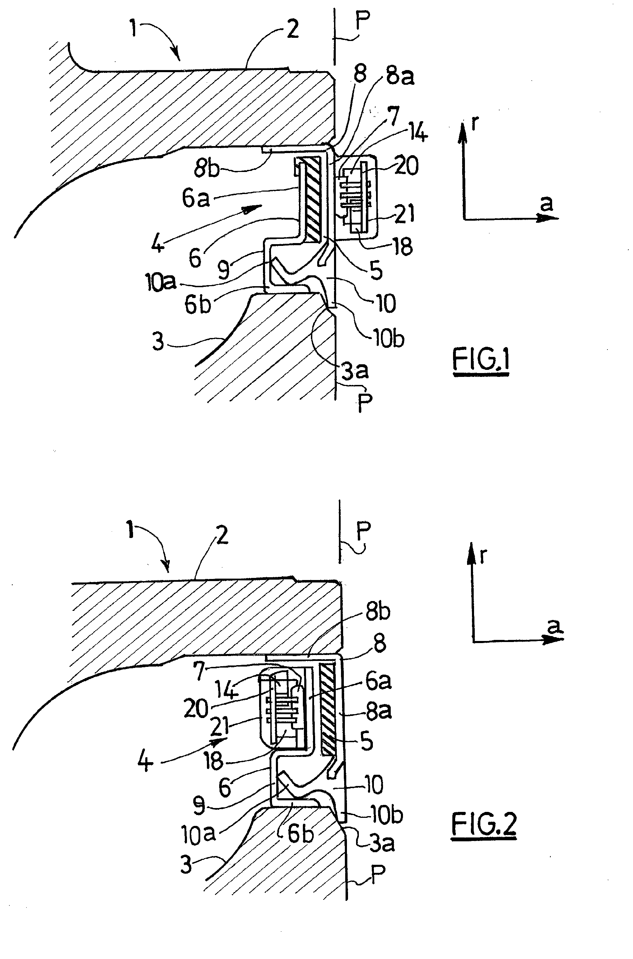

Sur les figures 1 et 2 est représenté un roulement étanche 1 du type comprenant une bague fixe 2 destinée à être associée à une structure fixe, une bague tournante 3 destinée à être associée à une structure tournante et des corps roulants (non représentés) disposés entre elles. En variante non représentée, le roulement peut être pourvu de plus d'une bague fixe 2 et/ou tournante 3.

Dans un exemple particulier, ce roulement 1 est destiné à être monté entre le châssis d'un véhicule automobile et le moyeu d'une roue dudit véhicule de sorte à permettre la rotation de ladite roue.

Entre la bague fixe 2 et la bague tournante 3 du roulement 1 est disposé coaxialement un ensemble 4 formant joint d'étanchéité à codeur magnétique 5 incorporé.

Dans la réalisation représentée, la bague intérieure 3 est tournante et la bague extérieure 2 est fixe mais, comme on le verra dans la suite de la description, la conception de l'ensemble 4 serait la même si la bague extérieure 2 était tournante.

Une première fonction de l'ensemble 4 est de servir à la mesure du sens de rotation et/ou de la vitesse de rotation et/ou de la position de la bague fixe 2 par rapport à la bague tournante 3.

En outre (comme représenté sur les figures 1 et 2), l'ensemble 4 peut avoir pour fonction de porter les moyens d'étanchéité du roulement 1 de sorte à isoler les corps roulants et les pistes de roulement de l'environnement extérieur au roulement 1.

A cet effet, l'ensemble 4 comprend :
- une armature porte-codeur 6, 8 à laquelle est associé le codeur 5 ;
- un dispositif de mesure 7 des impulsions issues du codeur 5 qui est apte à délivrer des signaux numériques en fonction du champ magnétique mesuré ; et
- une armature porte-capteur 8, 6 à laquelle est associé, à distance d'entrefer du codeur, le dispositif de mesure 7.

Les armatures 6, 8 sont réalisées dans un matériau amagnétique, par exemple en matériau métallique ou polymérique.

Dans les modes de réalisation représentés sur les figures 1 et 2, l'armature 6 comprend un disque radial 6a et, solidaire, une portée cylindrique axiale 6b qui est emmanchée à force sur la bague intérieure 3 du roulement 1.

L'armature 8 comprend un disque radial 8a sur l'extrémité duquel est formée une portée cylindrique axiale 8b qui est emmanchée à force sur la bague extérieure 2.

L'armature 6 est placée à l'intérieur du roulement 1 par rapport à l'armature 8 avec un jeu suffisant entre elles pour permettre leur rotation respective.

Dans la description les termes « axial » et « radial » sont définis par rapport aux directions « a » et « r » représentées sur les figures 1 et 2.

L'armature 6 comprend en outre un logement annulaire 9 décalé axialement qui est formé entre le disque 6a et la portée 6b.

L'étanchéité est réalisée par un revêtement élastomère 10, par exemple en VITON, acrylonitrile ou analogue, comportant une lèvre axiale 10a et une lèvre radiale 10b qui est surmoulé sur le disque radial 8a de l'armature 8.

La lèvre 10a est disposées dans le logement 9 en appui sur la face libre interne des disques 6a, 6b et la lèvre 10b est en appui directement dans un logement 3a prévu dans la bague intérieure 3.

Dans cette réalisation, la disposition relative des armatures 6, 8 et la présence du revêtement élastomérique 10 permettent d'assurer l'étanchéité dynamique du roulement 1 lors de la rotation relative de l'armature 6 par rapport à l'armature 8.

Dans les modes de réalisation représentés sur les figures 1 et 2, les faces extérieures des bagues 2, 3 et du disque 8a sont sensiblement contenues dans un plan P de sorte à limiter l'encombrement axial du roulement 1 et à faciliter le montage de l'ensemble 4 sur le roulement 1.

Dans le mode de réalisation représenté sur la figure 1, l'armature 8 porte le dispositif de mesure 7 qui est associé sur la face extérieure du disque 8a et l'armature 6 porte le codeur 5 qui est surmoulé sur la face extérieure du disque 6a.

Dans le mode de réalisation représenté sur la figure 2, l'armature 6 porte le dispositif de mesure 7 qui est associé sur la face intérieure du disque 6a et l'armature 8 porte le codeur 5 qui est surmoulé sur la face intérieure du disque 6a. Cette réalisation permet, en disposant le dispositif de mesure 7 à l'intérieur du roulement, de ne pas augmenter l'encombrement axial dudit roulement.

On décrit maintenant la fonction mesure du sens de rotation et/ou de la vitesse de rotation et/ou de la position de la bague fixe 2 par rapport à la bague tournante 5 qui est réalisée à l'aide du codeur 5 et du dispositif de mesure 7 disposé à distance d'entrefer du codeur 5. En variante, et de façon analogue, il peut être prévu de mesurer le sens de rotation relatif et/ou la vitesse de rotation relative et/ou la position relative de la bague 2 par rapport à la bague 5, c'est-à-dire que la bague fixe 2 soit animée d'une rotation relative par rapport à la bague tournante 3.

Par exemple, le codeur 5 est une pièce annulaire en matériau synthétique chargé de particules de ferrite formée d'une pluralité de domaines contigus à direction d'aimantation inversée d'un domaine donné par rapport aux deux domaines qui lui sont contigus.

Suivant une première variante, le dispositif de mesure 7 comprend au moins un élément sensible 12 disposé en regard et à distance d'entrefer du codeur 5.

Suivant une deuxième variante, le dispositif de mesure 7 comprend une pluralité d'éléments sensibles alignés 12.

Dans ces deux variantes, les éléments sensibles 12 peuvent être choisis dans le groupe comprenant les sondes à effet Hall, les magnétorésistances, les magnétorésistances géantes.

Le principe de la détection des signaux issus du codeur 5 ainsi que de leur traitement est par exemple décrit dans les documents FR-A-2 769 087 et FR-A-2 769 088 issus de la demanderesse dont les descriptions ne seront pas reprises ici.

Toutefois, et à des fins de clarté, on indique que le dispositif de mesure 7 délivre au moins deux signaux électriques qui sont de forme sinusoïdale, de même amplitude, centrés sur la même valeur moyenne et en quadrature l'un par rapport à l'autre.

A partir de ces signaux, il est possible d'obtenir, par l'intermédiaire de moyens électroniques de traitement, des signaux numériques qui permettent, au moyen d'un calculateur électronique 13, de connaître le sens de rotation et/ou la vitesse de rotation et/ou la position de la bague fixe 2 par rapport à la bague tournante 3.

En variante, le dispositif de mesure 7 peut comprendre un interpolateur augmentant la résolution des signaux de sortie, tel que celui décrit dans le document FR-A-2 769 087.

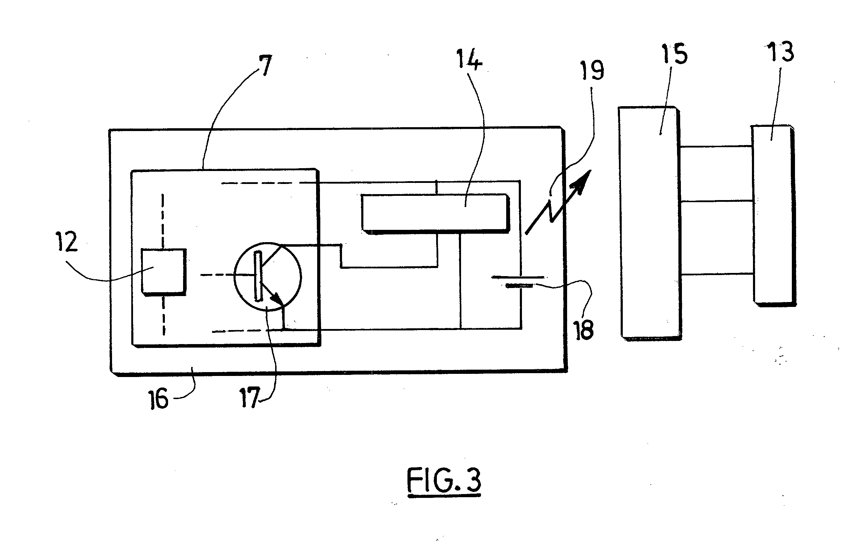

On décrit ci-dessous, en relation avec la figure 3, le dispositif de mesure 7 et un système émetteur/récepteur apte à transmettre une onde radio électrique représentative des signaux issus dudit dispositif 7 depuis un émetteur 14 vers un récepteur externe 15 situé à distance de l'ensemble 4.

L'émetteur radio électrique 14 est intégré au dispositif de mesure dans un circuit intégré personnalisé type ASIC 16 (circuit intégré pour application spécifique) qui est associé, par exemple par collage ou analogue, directement au disque 8a, 6a de l'armature 8, 6 avec les éléments sensibles 12 en regard et à distance d'entrefer du codeur 5.

Le circuit 16 intègre alors les éléments sensibles 12, les moyens électroniques de traitement des signaux détectés (non représentés) et connectés à eux, par exemple par l'intermédiaire d'un transistor de commutation de sortie 17, à l'émetteur radio électrique 14.

De préférence, l'ensemble de ces composants est intégré sur le circuit 16 de façon circulaire de sorte à limiter le phénomène de balourd lors de la rotation.

Dans le mode de réalisation représenté sur la figure 2, le circuit 16 comprend en outre une pile 18 ou une batterie pour son alimentation en énergie électrique.

Dans le but d'économiser l'énergie de la pile 18 et donc d'augmenter sa durée de vie, un dispositif peut être prévu pour mettre l'émetteur 14 en état de veille en l'absence de détection de mouvement relatif entre le codeur 5 et le dispositif de mesure 7.

En variante, l'émetteur radio électrique 14 peut être alimenté en énergie électrique par une bobine couplée au champ magnétique alternatif généré par le codeur 5.

Par exemple, la bobine peut être prévue sur le circuit intégré 16 sous la forme d'une piste circulaire spiralée et être placée à distance d'entrefer du codeur 5 de sorte à générer l'énergie nécessaire au circuit 16.

Ainsi, l'énergie nécessaire au dispositif de mesure 7 et à l'émetteur 14 est générée dans l'ensemble 4 de sorte qu'on s'affranchit ainsi de l'utilisation de conducteurs électriques d'alimentation externe.

En sortie du dispositif de mesure 7, les signaux digitalisés sous forme de front montant et de front descendant activent, à chaque changement d'état, l'émetteur 14 qui va générer une onde radio électrique 19 haute fréquence codée et de brève durée représentative de l'identité du dispositif de mesure 7 et du type de transition (front montant ou descendant).

Les signaux sont alors transmis depuis l'émetteur 14 associé à l'ensemble 4 vers le récepteur externe 15 par l'intermédiaire d'une antenne 20 qui est associée à l'émetteur radio électrique 14 de sorte, là aussi, à s'affranchir de l'utilisation de conducteurs électriques reliant l'ensemble 4 à une partie externe.

L'antenne 20 est formée d'une piste circulaire en cuivre réalisée dans le circuit 16 de sorte à limiter l'encombrement du dispositif de mesure 7, notamment s'il est mis en rotation avec la bague tournante.

En outre, et toujours dans le cas de la mise en rotation du dispositif de mesure 7, la réalisation de l'antenne 20 sous forme circulaire permet de ne pas affecter la directivité de son rayonnement lors de la rotation.

Le récepteur 15, accordé sur la bande fréquence incidente de l'émetteur 14 à la construction, reçoit, après une phase d'apprentissage du code déclenché par l'émetteur 14, les ondes émises par l'émetteur 14, reconstitue les signaux originaux puis les adresse à un calculateur 13 auquel il est associé.

Le calculateur 13 est apte, à partir des signaux transmis par le récepteur 15, à calculer le sens de rotation et/ou la vitesse de rotation et/ou la position du codeur 5 par rapport au dispositif de mesure 7 et à les adresser à tout système nécessitant ces informations.

Grâce à ce système émetteur/récepteur d'onde radio électrique, on s'affranchit des contraintes de positionnement du récepteur 15 par rapport à l'émetteur 14.

En effet, par exemple avec une puissance d'émission de l'émetteur 14 de 5 milliwatts et une longueur d'antenne 20 de 3 centimètres, on peut placer le récepteur 15 à 2 mètres de l'émetteur 14.

Ainsi, l'émetteur 14 est prévu, de fabrication, dans l'ensemble 4 et le récepteur 15 qui est externe à lui est placé, sans contrainte de positionnement, dans un endroit quelconque du véhicule.

Par ailleurs, un même ensemble 4 selon l'invention peut être indifféremment utilisé dans un roulement 1 à bague intérieure fixe ou dans un roulement à bague intérieure tournante.

En effet, le dispositif de mesure 7 étant dépourvu de conducteurs électriques qui relient l'ensemble 4 avec une partie externe fixe, il peut être mis en rotation conjointement à la bague tournante.

A cet effet, avec l'ensemble 4 représenté les figures 1 et 2, soit l'armature 6 est associée à la bague fixe et l'armature 8 est associée à la bague tournante soit l'armature 6 est associée à la bague tournante et l'armature 8 est associée à la bague fixe.

En variante, la bague intérieure du roulement 1 représenté sur les figures 1 et 2 peut indifféremment être fixe ou tournante.

En outre, et pour améliorer la capacité de mise en rotation du dispositif de mesure 7 en améliorant son équilibrage dynamique, il est envisageable d'associer le dispositif de mesure 7 à l'armature porte-capteur 8, 6 par l'intermédiaire d'un surmoulage étanche 21 qui élimine le phénomène de balourd néfaste à la rotation.

Par exemple, le surmoulage 21 est associé à l'armature porte-capteur 8, 6 par des « crevées » et en épouse partiellement ou complètement la circonférence en fonction du diamètre du roulement 1 vis-à-vis de l'encombrement du circuit 16.

Suivant l'invention, l'ensemble 4 peut être assemblé préalablement à son montage entre la bague fixe 2 et la bague tournante 3 du roulement préalablement montées. Ainsi, on peut s'affranchir des contraintes de positionnement précis du codeur 5 par rapport aux éléments sensibles 12.

De plus, dans l'ensemble 4 la distance entre le codeur 5 et les éléments sensibles 12 est courte, maîtrisée à la construction et invariable dans le temps.

Par conséquent, l'intégration de l'ensemble 4 dans un roulement 1 en est facilitée et n'a pas de répercussion sur la dimension du roulement 1, notamment du fait de son faible encombrement axial.

## Revendications

1. Roulement ou palier du type comprenant au moins une bague fixe (2) destinée à être associée à une structure fixe, au moins une bague tournante (3) destinée à être associée à une structure tournante, des corps roulants disposés entre lesdites bagues, et, monté entre une bague fixe (2) et une bague tournante (3), un ensemble (4) comprenant :
- une armature porte-codeur (6, 8) à laquelle est associé le codeur (5) ;
- un dispositif de mesure (7) des impulsions issues du codeur (5) qui est apte à délivrer des signaux numériques en fonction du champ magnétique mesuré ;
- une armature porte-capteur (8, 6) à laquelle est associé, à distance d'entrefer du codeur (5), le dispositif de mesure (7) ; et
- un émetteur radio électrique (14) qui est intégré au dispositif de mesure (7) dans un circuit intégré personnalisé type ASIC (16) de sorte à transmettre une onde radio électrique (19) représentative des signaux issus dudit dispositif (7) vers un récepteur externe (15) destiné à être situé à distance de l'ensemble (4), ledit récepteur (15) étant apte, à partir de ces ondes, à adresser à un calculateur (13) les signaux nécessaires pour calculer le sens de rotation et/ou la vitesse de rotation et/ou la position du codeur (5) par rapport au dispositif de mesure (7) ;
ledit roulement étant **caractérisé en ce que** l'antenne (20) de l'émetteur radio électrique (14) est formée d'une piste circulaire réalisée dans le circuit (16).

2. Roulement selon la revendication 1, **caractérisé en ce que** l'armature porte-codeur (6, 8) est associée à la bague fixe (2) et l'armature porte-capteur (8, 6) est associée à la bague tournante (3).

3. Roulement selon la revendication 1, **caractérisé en ce que** l'armature porte-codeur (6, 8) est associée à la bague tournante (3) et l'armature porte-capteur (8, 6) est associée à la bague fixe (2).

4. Roulement selon l'une quelconque des revendications 1 à 3, **caractérisé en ce que** le dispositif de mesure (7) comprend au moins un élément sensible (12) disposé en regard et à distance d'entrefer du codeur (5), lesdits éléments sensibles (12) étant choisis dans le groupe comprenant les sondes à effet Hall, les magnétorésistances, les magnétorésistances géantes.

5. Roulement selon la revendication 4, **caractérisé en ce que** le dispositif de mesure (7) comprend une pluralité d'éléments sensibles alignés (12).

6. Roulement selon l'une quelconque des revendications 1 à 5, **caractérisé en ce que** le codeur (5) est une pièce annulaire en matériau synthétique chargé de particules de ferrite formée d'une pluralité de domaines contigus à direction d'aimantation inversée d'un domaine donné par rapport aux deux domaines qui lui sont contigus, ladite pièce étant surmoulée sur l'armature porte-codeur (6, 8).

7. Roulement selon l'une quelconque des revendications 1 à 6, **caractérisé en ce que** l'émetteur radio électrique (14) est alimenté en énergie électrique par une pile (18) et **en ce que** l'émetteur (14) est mis en état de veille en l'absence de détection de mouvement relatif entre le codeur (5) et le dispositif de mesure (7).

8. Roulement selon l'une quelconque des revendications 1 à 6, **caractérisé en ce que** l'émetteur radio électrique (14) est alimenté en énergie électrique par une bobine couplée au champ magnétique alternatif généré par le codeur (5).

9. Roulement selon l'une quelconque des revendications 1 à 8, **caractérisé en ce que** :
- l'armature (6) comprend un disque radial (6a) et, solidaire, une portée cylindrique axiale (6b) destinée à être emmanchée sur l'un des supports (2, 3) ;
- l'armature (8) comprend un disque radial (8a) sur l'extrémité duquel est formée une portée cylindrique axiale (8b) destinée à être emmanchée sur l'autre support (3, 2).

10. Roulement selon la revendication 9, **caractérisé en ce que** :
- l'armature (6) comprend en outre un logement annulaire (9) décalé axialement formé entre le disque (6a) et la portée (6b) ;
- un revêtement élastomère d'étanchéité (10) comportant une lèvre axiale (10a) et une lèvre radiale (10b) qui est surmoulé sur le disque radial (8a) de l'armature (8) ;
- la lèvre (10a) est disposée dans le logement (9 ) en appui sur la face libre interne des disques (6a, 6b) et la lèvre (10b) est en appui directement dans un logement (3a) prévu dans la bague intérieure (3).

11. Roulement selon la revendication 9 ou 10, **caractérisé en ce que** le codeur (5) est associé sur la face extérieure du disque (6a) et **en ce que** le dispositif de mesure (7) est associé sur la face extérieure du disque (8a) avec les éléments sensibles (12) en regard et à distance d'entrefer du codeur (5).

12. Roulement selon la revendication 9 ou 10, **caractérisé en ce que** le codeur (5) est associé sur la face intérieure du disque (8a) et **en ce que** le dispositif de mesure (7) est associé sur la face intérieure du disque (6a) avec les éléments sensibles (12) en regard et à distance d'entrefer du codeur (5).

13. Roulement selon la revendication 11 ou 12, **caractérisé en ce que** le dispositif de mesure (7) est associé à l'armature porte-capteur (8, 6) par l'intermédiaire d'un surmoulage étanche (21).

14. Roulement selon l'une quelconque des revendications 9 à 13, **caractérisé en ce que** les faces extérieures des bagues (2, 3) et du disque (8a) sont sensiblement contenues dans un plan P de sorte à limiter l'encombrement axial du roulement (1).

15. Procédé de montage d'un roulement selon l'une quelconque des revendications 1 à 14, **caractérisé en ce qu'**il comprend les étapes prévoyant de:
- préassembler l'ensemble (4) ;
- monter l'ensemble préassemblé (4) entre une bague fixe (2) et une bague tournante (3) du roulement préalablement monté.
